# NEUE EUROPÄISCHE PATENTSCHRIFT

(11) **EP 2 172 413 B2**
(45) Veröffentlichungstag und Bekanntmachung des Hinweises auf die Entscheidung über den Einspruch: **02.01.2019**
(45) Hinweis auf die Patenterteilung: 17.06.2015
(21) Anmeldenummer: 09012231.8
(22) Anmeldetag: 25.09.2009
(51) Int. Cl.: B66F 9/075, B66F 9/24, B66F 17/00, G01G 19/08, G01G 23/37

(54) **Verfahren zur Anzeige zulässiger Lasten**
Method for displaying allowable loads
Procédé d'affichage de charges admises

(30) Priorität: 01.10.2008 DE 102008050204
(43) Veröffentlichungstag der Anmeldung: 07.04.2010
(73) Patentinhaber: Linde Material Handling GmbH, 63743 Aschaffenburg (DE)
(72) Erfinder: Schröder, Frank, Dr., 63839 Kleinwallstadt (DE); Wenzel, Stefan, Dr., 64287 Darmstadt (DE)
(74) Vertreter: Patentship Patentanwaltsgesellschaft mbH

(56) Entgegenhaltungen:
- GB-A- 2 360 500
- GB-A- 2 437 629
- JP-A- 6 247 698
- US-A- 4 511 974
- US-A- 5 995 001

## Beschreibung

Die Erfindung betrifft ein Verfahren zur Anzeige zulässiger Lasten eines Flurförderzeugs. Insbesondere betrifft die Erfindung ein Verfahren zur Anzeige zulässiger Lasten eines Flurförderzeugs mit einem Hubgerüst und einer Anzeigevorrichtung, bei dem durch die Anzeigevorrichtung ein Lastdiagramm dargestellt wird, das als Y-Achse eine Hubhöhenskala und als X-Achse eine Lastmomentwertskala hat, wobei in dem Lastdiagramm ausgehend von einer senkrechten Linie für ein maximal absolut zulässiges Lastmoment, das durch die Lage des Schwerpunktes der Last in Bezug auf die Länge eines Lastaufnahmemittels, insbesondere einer Lastgabel, sowie die Last bestimmt wird, eine von dem Lastmoment abhängige Grenzkurve für die Hubhöhe dargestellt wird.

Um den Fahrer über die Tragfähigkeit des von ihm benutzten Flurförderzeugs, beispielsweise eines Gabelstaplers zu informieren, ist bekannt und gesetzlich vorgeschrieben, in einem von einem Fahrerplatz aus sichtbaren Lastdiagramm die Abhängigkeit der zulässigen Last von der Hubhöhe und einer Lage des Schwerpunktes der Last in Bezug auf die Länge eines Lastaufnahmemittels, insbesondere von Lastgabeln, darzustellen. Der sich durch die Lage des Schwerpunkts ergebende Hebel bestimmt zusammen mit dem Lastgewicht das Lastmoment.

Nachteilig an diesem Stand der Technik ist, dass ein eigentlich dreidimensionales Kennfeld durch eine Mehrzahl von zweidimensionalen Linien für die unterschiedlichen Schwerpunktlagen in dem Lastdiagramm dargestellt wird und dies verhindert eventuell, dass das Lastdiagramm schnell und intuitiv gelesen werden kann. In der Praxis wird daher oft nicht vor einer Aufnahme einer Last geprüft, ob eventuell für diese Last und deren zugehöriges Lastmoment eine zulässige Hubhöhe überschritten wird.

Auch sind einem Fahrer die tatsächlichen Größen der Last, die Lage des Schwerpunkts der Last auf den Lastaufnahmemitteln, somit das Lastmoment, und auch oftmals die Hubhöhe unbekannt, so dass das Lastdiagramm nicht genutzt werden kann. Jedoch müssen die Angaben dieses Lastdiagramms in allen Arbeitssituationen eingehalten werden, um ein Kippen des Flurförderzeugs zuverlässig zu vermeiden.

Aus der US 4,511,974 A ist eine Vorrichtung und ein Anzeigeverfahren für den Ladezustand eines Gabelstaplers bekannt. Dabei wird in einer Ausführungsform das Gewicht über der Schwerpunktposition dargestellt. Ebenso ist aus der Druckschrift bekannt, in einer dreidimensionalen Darstellung Gewicht, Schwerpunktposition und Hubhöhe darzustellen.

Der vorliegenden Erfindung liegt die Aufgabe zugrunde, ein schnell und intuitiv zu erfassendes Lastdiagramm zur Verfügung zu stellen.

Die Aufgabe wird durch das erfindungsgemäße Verfahren nach Anspruch 1 sowie ein Flurförderzeug nach Anspruch 7 gelöst. Vorteilhafte Ausgestaltungen werden in den Unteransprüchen angegeben.

Die Aufgabe wird erfindungsgemäß dadurch gelöst, dass bei einem Verfahren zur Anzeige zulässiger Lasten eines Flurförderzeugs mit einem Hubgerüst und einer Anzeigevorrichtung, bei dem durch die Anzeigevorrichtung ein Lastdiagramm dargestellt wird, das Lastdiagramm als Y-Achse eine Hubhöhenskala und als X-Achse eine Lastmomentwertskala hat. In dem Lastdiagramm wird ausgehend von einer senkrechten Linie für ein maximal absolut zulässiges Lastmoment, das durch die Lage des Schwerpunktes der Last in Bezug auf die Länge eines Lastaufnahmemittels, insbesondere einer Lastgabel, und die Last bestimmt wird, eine von dem Lastmoment abhängige Grenzkurve für die Hubhöhe dargestellt. Dabei wird eine Hubhöhenlinie eines konstanten Y-Wertes für eine bestimmte Hubhöhe dargestellt und von dem Schnittpunkt der Hubhöhenlinie mit der Grenzkurve durch eine senkrechte Lastlinie das hierzu zulässige Lastmoment dargestellt. Durch eine Sensorvorrichtung wird die gegenwärtige Hubhöhe des Hubgerüstes gemessen und das hierzu zulässige Lastmoment dargestellt.

Die sich daraus ergebende Grenzkurve für verschiedene Lastmomente kann schnell und intuitiv erfasst werden. Die Standsicherheit eines Flurförderzeugs mit angehobener Last wird entscheidend auch durch die vertikale Schwerpunktlage der Last beeinflusst. Näherungsweise wird für diese die aktuelle Hubhöhe der Lastaufnahmemittel als Maß genommen. Dieses Maß kann ggf. um einen konstanten Wert vergrößert werden, um den Höhenabstand zwischen Lastaufnahmemittel und der Last zu berücksichtigen. Da die Werte schnell und einfach erkannt werden können, ergibt sich eine deutliche Reduzierung des Kipprisikos für ein Flurförderzeug aufgrund von Fehlbedienungen.

Dadurch ist intuitiv und schnell erkennbar, welche Werte von Hub und Lastmoment in der Darstellung des Lastdiagramms einander als Maximalwerte zugeordnet sind.

In günstiger Umsetzung des erfindungsgemäßen Verfahrens wird unterhalb der X-Achse ein Balkendiagramm für das Lastmoment dargestellt, von dem durch die senkrechte Lastmomentlinie ein hervorgehobener Bereich abgetrennt wird.

Ein Balkendiagramm, bei dem ein hervorgehobener Bereich besteht, etwa durch eine andere Farbgebung, ermöglicht ein besonders schnelles und verständliches Erkennen, ein wie großer Teil eines maximalen Wertes, hier des Lastmoments bei geringer Hubhöhe, zur Verfügung steht.

Durch eine Sensorvorrichtung kann das gegenwärtige Lastmoment gemessen und die hierzu zulässige Hubhöhe dargestellt werden.

Die Ermittlung des Lastmoments kann beispielsweise durch die Messung des Drucks in Hubzylindern sowie der Kräfte in Neigezylindern erfolgen.

Vorteilhaft wird durch eine Sensorvorrichtung das gegenwärtige Lastmoment gemessen und beim Versuch, eine über dem Maximallastmoment liegende Last aufzunehmen, ein Wamhinweis eingeblendet und das Balkendiagramm reicht dann über das Maximallastmoment hinaus.

Durch eine Eingabevorrichtung kann eine Hubhöhe oder ein Lastmoment vorgegeben werden.

Dadurch kann ein Fahrer oder eine Bedienperson eines Flurförderzeugs bei bekanntem Lastmoment, durch Eingabe des Gewichts einer aufzunehmenden Last sowie Eingabe der Schwerpunktslage der aufzunehmenden Last leicht überprüfen, welche Hubhöhe zulässig ist und ob beispielsweise ein entsprechend hoch liegender Regalplatz erreicht werden kann. Durch das Darstellen der Linien wird der Wert genau angegeben und es werden Fehler durch eine Interpretation des Lastdiagramms seitens des Fahrers oder der Bedienperson des Flurförderzeugs vermieden. Ebenso kann eine Hubhöhe vorgegeben werden und das hierfür zulässige Lastmoment ermittelt werden. Diese Alternative hat den Vorteil, dass die Hubhöhe am ehesten von einem Fahrer oder einer Bedienperson abgeschätzt werden kann, z.B. durch bekannte Regal- oder Lasthöhen.

In günstiger Ausführungsform wird auf der Hubhöhenlinie aufliegend eine an der Y-Achse angeordnete stilisierte Lastgabel dargestellt.

In vorteilhafter Gestaltung des erfindungsgemäßen Verfahrens wird die Lastgabel an einem stilisierten Hubgerüst geführt dargestellt.

Vorteilhaft ist durch eine bildhafte Darstellung die Achse der Hubhöhe kenntlich gemacht und die Gefahr von Verwechslungen oder Falschinterpretationen wird vermindert.

Die Lage des Schwerpunktes der Last kann in Bezug auf die Länge eines Lastaufnahmemittels bestimmt werden und abhängig hiervon die Grenzkurve bestimmt, sowie anstatt dem Lastmoment die Last angezeigt werden.

Wird darauf verzichtet, den Lastschwerpunktsabstand von dem Hubgerüst zu erfassen, reduziert sich die Lastdiagrammdarstellung um eine Dimension und ist sicherer und schneller zu erfassen. Es ist dann nur noch der Zusammenhang zwischen zulässiger Last und Hubhöhe zu beachten. Da jedoch bei Lastaufnahmemitteln mit einer großen Längserstreckung, etwa einer langen Lastgabel, durch diese Beschränkung die zulässigen Hubhöhen und Lasten unnötig eingeschränkt werden, kann das Lastdiagramm an die bekannte Schwerpunktlage angepasst werden. Dies kann auch durch eine Vorgabe eines Wertes erfolgen, wenn zum Beispiel bekannt ist, dass der Schwerpunkt bei der Art der zu transportierenden Last innerhalb bestimmter Grenzwerte liegt.

Vorteilhaft kann das Lastmoment bei Gegengewichtsgabelstaplern durch Messen der Hinterachslast bestimmt werden.

Für eine Bestimmung des aktuell wirkenden Lastmoments und somit der Bestimmung des Schwerpunkts der Last in Längsrichtung, ist mindestens ein Sensor erforderlich, dessen Signal mit dem Lastmoment in direktem Zusammenhang steht. Hierzu ist die Messung der Hinterachslast bei Gegengewichtsstaplern eine bevorzugte Größe, da in diesem Signal der Einfluss der Fahrzeugausstattung, z.B. der Eigenmasse des Hubgerüsts, des Ausbauzustand der Fahrerkabine, sowie der Mastneigung selbsttätig mit berücksichtigt wird und ein direktes Maß für die Kippsicherheit vorliegt. Soweit durch einen weiteren Sensor, beispielsweise in der Hubvorrichtung oder auch der Vorderachslast, das Lastgewicht bekannt ist, kann die Schwerpunktlage in der Längsrichtung bestimmt werden, da der Hebelarm der Last in Bezug zur Vorderachse und somit die Schwerpunktlage der Last in Längsrichtung bestimmbar ist und sonstige Effekte wie Fahrergewicht und Treibstoffvorrat oder Abweichungen bei Batteriegewichten berücksichtigt werden können.

In günstiger Ausführung wird die maximale Hubhöhe als Zahlwert in das Lastdiagramm eingeblendet.

In günstiger Ausführungsform kann für die Lage des Schwerpunktes der Last in Bezug auf die Länge eines Lastaufnahmemittels ein vorbestimmter Wert, insbesondere die Mitte der Längserstreckung des Lastaufnahmemittels verwendet werden, um aus der Last ein nominelles Lastmoment zu bestimmen.

Vorteilhaft wird dadurch ein Lastdiagramm nur für einen vorgewählten Wert der Schwerpunktlage der Last in Bezug auf die Länge der Lastaufnahmemittel, beispielsweise der Lage des Schwerpunkts der Last in Bezug auf die Längsachse eines Gegengewichtsgabelstaplers mit Lastgabel, und dadurch einfach aus der Last bestimmbare Lastmomente dargestellt. Dabei kann für die Schwerpunktlage der ungünstigste Fall als vorbestimmter Wert angenommen werden, so dass bei Einhalten des Lastdiagramms kein unsicherer Betriebszustand eintreten kann. Insbesondere kann dadurch das Lastmoment nur durch Eingabe des Lastgewichts als nominelles Lastmoment bestimmt werden. Dies ist vorteilhaft, wenn die Schwerpunktslage einer aufzunehmenden Last nicht bestimmbar ist.

Die Aufgabe wird auch durch ein Flurförderzeug mit einem Hubgerüst und einer Anzeigevorrichtung, sowie einer Steuervorrichtung gelöst, bei dem die Steuervorrichtung ein zuvor beschriebenes Verfahren durchführt. Bei einem solchen Flurförderzeug kann die Anzeigevorrichtung ein Display sein.

Weitere Vorteile und Einzelheiten der Erfindung werden anhand der in den schematischen Figuren dargestellten Ausführungsbeispiele näher erläutert. Hierbei zeigt
- Fig. 1: schematisch ein Flurförderzeug in der Ausführungsform als Gabelstapler,
- Fig. 2: ein Lastdiagramm nach dem Stand der Technik,
- Fig. 3: ein erstes entsprechend dem erfindungsgemäßen Verfahren dargestelltes Lastdiagramm,

- Fig. 4: ein zweites entsprechend dem erfindungsgemäßen Verfahren dargestelltes Lastdiagramm und
- Fig. 5: ein drittes entsprechend dem erfindungsgemäßen Verfahren dargestelltes Lastdiagramm.

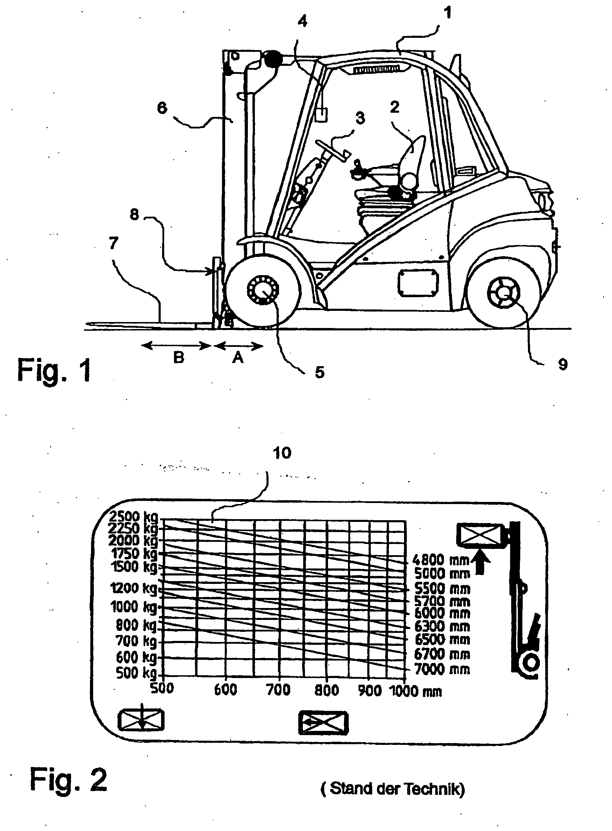

Die Fig. 1 zeigt schematisch ein Flurförderzeug in der Ausführungsform als Gabelstapler, bei dem das erfindungsgemäße Verfahren zum Einsatz kommt. In einer Fahrerkabine 1 mit einem Fahrerplatz 2 sind Bedieneinrichtungen, wie ein Lenkrad 3, sowie eine Display als Anzeigevorrichtung 4 angeordnet. Von einer Vorderachse 5 ist in einem Abstand A ein Hubgerüst 6 mit einer Lastgabel 7 positioniert. Der Schwerpunkt einer hier nicht dargestellten Last kann sich in Längsrichtung des Gabelstaplers in einem Schwerpunktsabstand B von einer Basis 8 der Lastgabel 7 befinden. Die Lastgabel 7 kann durch hier nicht zu erkennende Hubzylinder angehoben werden, wobei durch Messung des Drucks in den Hubzylindern das Gewicht einer auf der Lastgabel aufliegenden Last erfasst werden kann. Zugleich kann die Hinterachslast einer Hinterachse 9 erfasst werden.

Fig. 2 zeigt ein Lastdiagramm nach dem Stand der Technik, das entsprechend gesetzlichen Vorschriften an einem Gabelstapler angebracht sein muss. In dem Lastdiagramm werden Linien konstanter Last 10 abhängig von dem Schwerpunktsabstand B, in dem Lastdiagramm in Millimetern als X-Wert aufgetragen, dargestellt. Die Hubhöhe ist als Linie gleichen Y-Werts zu entnehmen, jedoch sind die Werte im Gegensatz zur Piktogrammdarstellung nach oben abnehmend dargestellt. Dies kann beim Ablesen zu Missverständnissen führen.

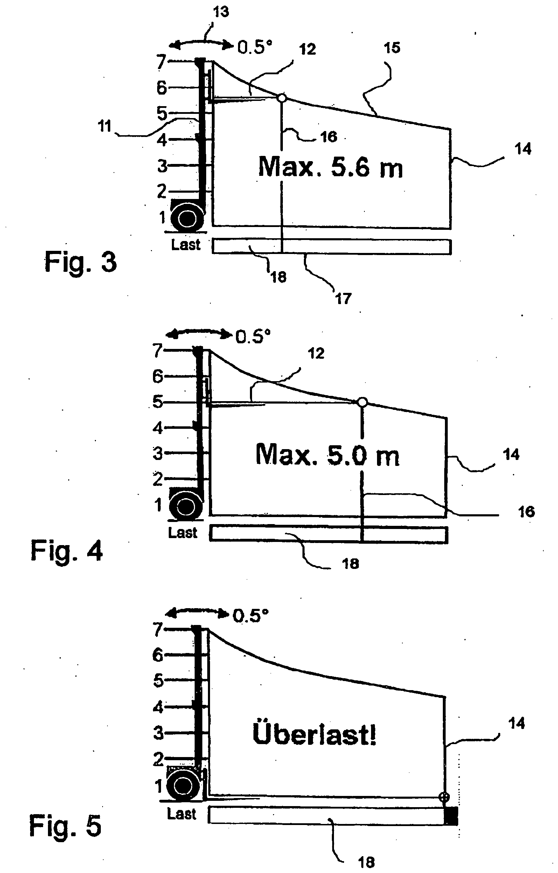

Fig. 3 zeigt ein erstes entsprechend dem erfindungsgemäßen Verfahren dargestelltes Lastmomentdiagramm. Zu einem vorgegebenen Wert für den Schwerpunktsabstand B ist als Y-Wert die Hubhöhe dargestellt, wobei dies durch ein stilisiertes Hubgerüst 11 und eine stilisierte Lastgabel 12 verdeutlicht ist. Auch ein aktueller Wert für eine Mastneigung kann durch einen Doppelpfeil 13 sowie eine Gradangabe dargestellt werden. Ausgehend von einer senkrechten Maximallastlinie 14 für ein maximal absolut zulässiges Lastmoment wird die Abhängigkeit zwischen maximaler Hubhöhe und Lastmoment durch eine Grenzkurve 15 dargestellt. Dabei ist die Skala des Lastmoments vereinfacht mit "Last" bezeichnet. Alle Betriebspunkte innerhalb der so gebildeten Fläche befinden sich in einem zulässigen Bereich. Eine senkrechte Lastmomentlinie 16 teilt von einem unterhalb der X-Achse dargestellten Balkendiagramm 17 für das Lastmoment einen der Hubhöhe entsprechenden farblich hervorgehobenen Bereich 18 für das der Hubhöhe entsprechende zulässige Lastmoment ab. Zusätzlich wird die zulässige Hubhöhe als Zahlwert eingeblendet.

Fig. 4 zeigt ein zweites entsprechend dem erfindungsgemäßen Verfahren dargestelltes Lastdiagramm, entsprechend dem der Fig. 3 für andere Werte. Bei diesem ist die Lastmomentlinie 16 nach rechts verschoben und die stilisierte Lastgabel 12 entsprechend tiefer für eine zulässige und als Zahl eingeblendete Hubhöhe von 5 m angeordnet. Der hervorgehobene Bereich 18 des Balkendiagramms verdeutlicht dabei, dass bei dieser Hubhöhe mehr als die Hälfte des Maximallastmoments, entsprechend der Maximallastmomentinie 14, zur Verfügung stehen.

Fig. 5 zeigt ein drittes entsprechend dem erfindungsgemäßen Verfahren dargestelltes Lastdiagramm, entsprechend dem der Fig. 3, wobei durch die Druckmessung der Hubzylinder des Hubgerüstes festgestellt wird, dass eine über der absoluten Maximallast liegendes Lastmoment aufgenommen werden soll. Dabei wird aus der Last das Lastmoment durch die Annahme eines Schwerpunktes in der Mitte der Längserstreckung der Last vereinfacht bestimmt. In diesem Fall liegt der Arbeitspunkt außerhalb des erlaubten Bereichs und es wird eine Warnung ausgegeben, indem "überlast" eingeblendet wird. Zusätzlich kann eine akustische Warnung erfolgen. Eine Lastmomentlinie wird nicht mehr dargestellt, ebenso wenig wie eine Hubhöhenlinie. Das Balkendiagramm 17 wird über die Maximallastmomentlinie hinaus und farblich hervorgehoben dargestellt.

Das Lastdiagramm kann automatisch angepasst an unterschiedliche Schwerpunktabstände dargestellt werden, wenn die Hinterachslast und die zum Hub nötige Kraft bestimmt wird und aus diesen Werten der Schwerpunktsabstand B wie oben beschrieben bestimmt wird.

Es sind auch Erweiterungen denkbar, wenn zusätzliche Sensorgrößen bestimmt werden, wie Lenkwinkel, Fahrzeugposition, Längs- und/oder Querneigung des Fahrzeugs und eine genauere Anpassungen aufgrund dieser Werte erfolgt. Auch können dann bei unzulässigen Werten automatische Bedienungseingriffe oder Fahreingriffe erfolgen.

## Patentansprüche

1. Verfahren zur Anzeige zulässiger Lasten eines Flurförderzeugs mit einem Hubgerüst (6) und einer Anzeigevorrichtung (4), bei dem durch die Anzeigevorrichtung (4) ein Lastdiagramm dargestellt wird, das als Y-Achse eine Hubhöhenskala und als X-Achse eine Lastmomentwertskala hat, wobei in dem Lastdiagramm ausgehend von einer senkrechten Linie für ein maximal absolut zulässiges Lastmoment (14), das durch die Lage des Schwerpunktes der Last in Bezug auf die Länge eines Lastaufnahmemittels, insbesondere einer Lastgabel (7), sowie die Last bestimmt wird, eine von dem Lastmoment abhängige Grenzkurve (15) für die Hubhöhe dargestellt wird,
**dadurch gekennzeichnet,**
**dass** eine Hubhöhenlinie eines konstanten Y-Wertes für eine bestimmte Hubhöhe dargestellt wird und von dem Schnittpunkt der Hubhöhenlinie mit der Grenzkurve (15) durch eine senkrechte Lastlinie (16) das hierzu zulässige Lastmoment dargestellt wird, wobei durch eine Sensorvorrichtung die gegenwärtige Hubhöhe des Hubgerüstes gemessen wird und das hierzu zulässige Lastmoment dargestellt wird.

2. Verfahren nach Anspruch 1,
**dadurch gekennzeichnet,**
**dass** unterhalb der X-Achse ein Balkendiagramm (17) für das Lastmoment dargestellt wird, von dem durch die senkrechte Lastmomentlinie (16) ein hervorgehobener Bereich (18) abgetrennt wird.

3. Verfahren nach einem der Ansprüche 1 oder 2,
**dadurch gekennzeichnet,**
**dass** auf der Hubhöhenlinie aufliegend eine an der Y-Achse angeordnete stilisierte Lastgabel (12) dargestellt wird.

4. Verfahren nach Anspruch 3,
**dadurch gekennzeichnet,**
**dass** die Lastgabel (12) an einem stilisierten Hubgerüst (11) geführt dargestellt wird.

5. Verfahren nach einem der Ansprüche 1 bis 4,
**dadurch gekennzeichnet,**
**dass** die maximale Hubhöhe als Zahlwert in das Lastdiagramm eingeblendet wird.

6. Verfahren nach einem der vorhergehenden Ansprüche,
**dadurch gekennzeichnet,**
**dass** für die Lage des Schwerpunktes der Last in Bezug auf die Länge eines Lastaufnahmemittels ein vorbestimmter Wert, insbesondere die Mitte der Längserstreckung des Lastaufnahmemittels verwendet wird, um aus der Last ein nominelles Lastmoment zu bestimmen.

7. Flurförderzeug mit einem Hubgerüst (6) und einer Anzeigevorrichtung (4), sowie einer Steuervorrichtung, die ein Verfahren nach einem der vorherigen Ansprüche durchführt.

8. Flurförderzeug nach Anspruch 7,
**dadurch gekennzeichnet,**
**dass** die Anzeigevorrichtung ein Display ist.

## Claims

1. Method for displaying allowable loads of an industrial truck having a lifting mast (6) and a display device (4), in which method a load diagram is displayed by the display device (4), which load diagram has a lifting height scale as Y axis and a load torque value scale as X axis, wherein in the load diagram a limiting curve (15) for the lifting height, which is dependent on the load torque, is displayed on the basis of a perpendicular line for a maximum absolutely allowable load torque (14) which is determined by the position of the centre of gravity of the load with respect to the length of a load handling means, in particular a load fork (7) and the load,
**characterized**
**in that** and wherein a lifting height line of a constant Y value is displayed for a specific lifting height and the load torque which is allowable in this respect is displayed by the point of intersection between the lifting height line with the limiting curve (15) by means of a perpendicular load line (16), wherein the present lifting height of the lifting mast is measured by a sensor device and the load torque which is allowable in this respect is displayed.

2. Method according to Claim 1,
**characterized**
**in that** a bar diagram (17) for the load torque is displayed underneath the X axis, from which bar diagram (17) a highlighted region (18) is separated by the perpendicular load torque line (16).

3. Method according to either of Claims 1 and 2,
**characterized**
**in that** a stylized load fork (12) which is arranged on the Y axis is displayed on the lifting height line.

4. Method according to Claim 3,
**characterized**
**in that** the load fork (12) is displayed guided on a stylized lifting mast (11).

5. Method according to one of Claims 1 to 4,
**characterized**
**in that** the maximum lifting height is included in the load diagram display as a numerical value.

6. Method according to one of the preceding claims,
**characterized**
**in that** a predetermined value, in particular at the centre of the longitudinal extent of a load handling means is used for the position of the centre of gravity of the load with respect to the length of the load handling means in order to determine a nominal load torque from the load.

7. Industrial truck having a lifting mast (6) and a display device (4) as well as a control device which carries out a method according to one of the preceding claims.

8. Industrial truck according to Claim 7,
**characterized**
**in that** the display device is a display.

## Revendications

1. Procédé d'affichage de charges admises d'un chariot élévateur avec un mât de levage (6) et un dispositif d'affichage (4) dans lequel un diagramme de charge est représenté par le dispositif d'affichage (4), lequel diagramme de charge a une échelle de hauteur de levage prenant la forme de l'axe Y et une échelle de valeur de couple de charge prenant la forme de l'axe X, une courbe limite (15) dépendant du couple de charge étant représentée pour la hauteur de levage dans le diagramme de charge à partir d'une ligne verticale pour un couple de charge (14) absolu admis maximal déterminé par la charge ainsi que par la position du centre de gravité de la charge par rapport à la longueur d'un moyen d'absorption de charge, notamment d'une fourche de levage de charge (7), **caractérisé en ce qu'**une ligne de hauteur de levage d'une valeur Y constante est représentée pour une hauteur de levage déterminée et le couple de charge admis correspondant est représenté par le point d'intersection de la ligne de hauteur de levage avec la courbe limite (15) par une ligne de charge verticale (16), la hauteur de levage actuelle du mât de levage étant mesurée par un dispositif de détection et le couple de charge admis correspondant étant représenté.

2. Procédé selon la revendication 1, **caractérisé en ce qu'**un diagramme à barres (17) prévu pour le couple de charge est représenté sous l'axe X à partir duquel une zone (18) mise en évidence est séparée par la ligne de couple de charge (16) verticale.

3. Procédé selon l'une quelconque des revendications 1 et 2, **caractérisé en ce qu'**une fourche de levage de charge (12) stylisée disposée au niveau de l'axe Y est représentée comme reposant sur la ligne de hauteur de levage.

4. Procédé selon la revendication 3, **caractérisé en ce que** la fourche de levage de charge (12) est représentée comme guidée au niveau d'un mât de levage (11) stylisé.

5. Procédé selon l'une quelconque des revendications 1 à 4, **caractérisé en ce que** la hauteur de levage maximale prend la forme d'une valeur numérique insérée dans le diagramme de charge.

6. Procédé selon l'une quelconque des revendications précédentes, **caractérisé en ce qu'**on utilise une valeur prédéterminée, notamment le milieu de l'extension longitudinale du moyen d'absorption de charge pour la position du centre de gravité de la charge par rapport à la longueur d'un moyen d'absorption de charge, pour déterminer un couple de charge nominal à partir de la charge.

7. Chariot élévateur avec un mât de levage (6) et un dispositif d'affichage (4), ainsi qu'un dispositif de commande mettant en oeuvre un procédé selon l'une quelconque des revendications précédentes.

8. Chariot élévateur selon la revendication 7, **caractérisé en ce que** le dispositif d'affichage est un écran.
